# EUROPÄISCHE PATENTSCHRIFT

(11) **EP 0 509 387 B1**
(45) Veröffentlichungstag und Bekanntmachung des Hinweises auf die Patenterteilung: **09.08.1995**
(21) Anmeldenummer: 92106104.0
(22) Anmeldetag: 09.04.1992
(51) Int. Cl.: B66F 9/065

(54) **Fahrzeug mit einer Hub- und Umsetzeinrichtung für einen Gabelträger oder dergleichen**
Vehicle with a hoisting and transfer device for a fork lift or the like
Véhicule avec un dispositif de levage et de transfert pour un élévateur à fourches ou analogue

(30) Priorität: 19.04.1991 DE 4112769
(43) Veröffentlichungstag der Anmeldung: 21.10.1992
(73) Patentinhaber: JOSEF BERGMEISTER GmbH & Co. BAUGESCHÄFT KG, D-82418 Murnau (DE)
(72) Erfinder: Bergmeister, Josef, Jr., W-8110 Murnau (DE)
(74) Vertreter: Flosdorff, Jürgen, Dr.

(56) Entgegenhaltungen:
- FR-A- 2 124 178
- FR-A- 2 307 917
- FR-A- 2 373 417
- GB-A- 864 180
- US-A- 3 032 215
- US-A- 3 342 362
- US-A- 3 606 060

## Beschreibung

Die Erfindung betrifft ein Fahrzeug gemäß dem Oberbegriff des Patentanspruchs 1.

Bei dem Fahrzeug kann es sich um einen Anhänger handeln, der mittels einer Zugmaschine verfahrbar ist, jedoch handelt es sich vorzugsweise um ein Kraftfahrzeug wie einen Lastwagen, insbesondere um einen sogenannten Unimog mit einer rückwärtigen, verhältnismäßig kleinen Lastfläche.

Diese Last- oder Tragfläche kann bei dem erfindungsgemäßen Fahrzeug einen Gabelträger oder auch ein anderes Arbeitsgerät aufnehmen, jedoch wird im folgenden durchgehend von der Handhabung eines Gabelträgers gesprochen, weil es sich hierbei um eine bevorzugte Anwendung des erfindungsgemäßen Fahrzeugs handelt. Es wird aber ausdrücklich betont, daß der Gabelträger bei Bedarf durch ein anderes, entsprechend angepaßtes Arbeitsgerät ersetzt werden kann.

Es besteht ein beträchtlicher Bedarf nach einem Fahrzeug, das so ausgerüstet ist, daß es einen Gabelträger transportieren und an einer gewünschten Arbeitsposition absetzen und wiederaufnehmen kann, ohne daß dieser Vorgang von einer oder mehreren Bedienungspersonen unter körperlichem Einsatz durchgeführt oder unterstützt wird, wobei die hierzu vorgesehene Ausrüstung die Verkehrssicherheit des Fahrzeugs, insbesondere eines Unimogs, nicht wesentlich beeinträchtigen soll.

Aus der FR-A-2373417 ist eine Vorrichtung zum Laden von Containern mit den Merkmalen des Oberbegriffs des Anspruchs 1 bekannt. Bei dieser Vorrichtung ist der Gabelträger auf einem horizontal beweglichen Schlitten angeordnet, der gemeinsam mit dem Gabelträger fest mit dem Fahrzeug verbunden werden kann. Zum Anheben und Absenken der Container sind 2 Kolben/Zylinderanordnungen vorgesehen.

Der vorliegenden Erfindung liegt die Aufgabe zugrunde, ein Fahrzeug anzugeben, mit dem ein Gabelträger oder dergleichen in stets parallel bleibender Ausrichtung zwischen der Tragfläche des Fahrzeugs und einer Arbeitsposition umsetzbar ist.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Das erfindungsgemäße Fahrzeug ist mit einer Hub- und Umsetzeinrichtung für den Gabelträger vereshen, die fest mit dem Fahrzeug verbunden ist und mit der der Gabelträger zwischen der Tragfläche des Fahrzeugs und einer in der Nähe der Tragfläche befindlichen Arbeitsposition umsetzbar ist. Diese Arbeitspositioini befindet sich typischerweise am Boden neben bzw. hinter dem Fahrzeug, kann sich aber auch selbstverständlich beispielsweise auf der Ladefläche eines anderen Fahrzeugs befinden, wobei grundsätzlich die Arbeitsposition in einer beliebigen Höhe des Wirkungskreises der Hub- und Umsetzeinrichtung liegen kann.

Wichtig ist, daß der Gabelträger beim Umsetzen stets in gleichbleibender Ausrichtung bewegt wird, d.h. seine horizontale Auflagerfläche, auf der beispielsweise ein Container befestigt sein kann, verbleibt beim Umsetzen stets in horizontaler Lage, so daß der Gabelträger auch im beladenen Zustand ohne Gefährdung des Ladeguts und ohne Verletzungsgefahr für umstehende Personen durch in Bewegung geratenes Ladegut umgesetzt werden kann. Der Gabelträger kann zudem ohne zusätzliche Handgriffe einer oder mehrerer Bedienungspersonen abgesetzt werden, da er stets in korrekter Ausrichtung verbleibt, so daß die Handhabung schnell, bequem und unter geringem Arbeitsaufwand erfolgen kann.

Die Hub- und Umsetzeinrichtung hat wenigstens einen, vorzugsweise zwei in Breitenrichtung der Tragfläche voneinander beabstandete Schwenkarme, die mittels jeweils einer oder einer gemeinsamen Antriebseinrichtung verschwenkbar sind. Es können mehr als zwei Schwenkarme vorgesehen sein, wenn die zu bewegenden Lasten dies zweckmäßig erscheinen lassen, wobei die Schwenkarme im übrigen zweckmäßigerweise übereinstimmend ausgeformt sind. Jeder Schwenkarm ist fahrzeugseitig vorzugsweise an einem Rahmen angelenkt, der auf der Tragfläche des Fahrzeugs vorgesehen sein sollte, und den Gabelträger aufnimmt, wenn dieser mittels der Hub- und Umsetzeinrichtung entsprechend verschwenkt wird.

Die Hub- und Umsetzeinrichtung ist mit jeweils zwei Führungsrollen für jeden Schwenkarm versehen, über die ein direkt oder indirekt mit dem GAbelträger verbundenes Zugglied verläuft. Die Aufgabe dieses Zuggliedes ist es, den an den Schwenkarmen vorzugsweise angelenkten Gabelträger während des Umsetzens stets parallel zu sich selbst zu halten, es sei denn, daß ein Kippvorgang ausgeführt werden soll, was weiter unten näher beschrieben wird.

Das Zugglied, das die Parallelverlagerung des Gabelträgers gewährleistet, ist in einer bevorzugten Ausgestaltung ein Seil, dessen Länge bei den auftretenden Belastungen im wesentlichen konstant bleibt. Das Zugglied kann aber auch beispielsweise eine Kette sein.

Eine der beiden Führungsrollen ist so angebracht, daß sie an der fahrzeugseitigen Drehachse des Schwenkarmes oder mit ihrem Mittelpunkt auf einer mit dieser Drehachse fluchtenden Verlängerung sitzt, und normalerweise unbeweglich, d.h. nichtdrehbar gehalten ist. Dies heißt, daß diese Führungsrolle gegenüber dem Rahmen feststehend gehalten ist, so daß die Rolle unbeweglich bleibt, wenn der Schwenkarm verschwenkt wird, wobei allerdings vorgesehen sein kann, daß die Rolle zur Ausführung der bereits oben erwähnten Kippbewegung in Bewegung versetzt werden kann.

Die zweite Führungsrolle sitzt auf der Drehachse zwischen dem Gabelträger und den Schwenkarmen oder mit ihrem Mittelpunkt auf einer mit dieser Drehachse fluchtenden Verlängerung. Diese Führungsrolle kann frei drehbar gelagert sein oder fest mit dem Gabelträger bzw. mit einer mit diesem verbundenen Lasche verbunden sein, um gemeinsam mit dem Gabelträger verschwenkt zu werden, wenn dieser eine Kippbewegung ausübt, während in diesem Falle die Führungsrolle ansonsten unbeweglich gehalten ist.

Das Zugglied, dem die besondere Aufgabe zukommt, den Gabelträger bei dessen Umsetzen in einer zu sich parallel verbleibenden Lage zu halten, verläuft stets über beide Führungsrollen, und zwar beim Schwenkvorgang des Schwenkarms mit sich stetig veränderndem Umschlingungsbereich, wobei das Zugglied mit einem Ende an dem Gabelträger und mit dem anderen Ende entweder an der ersten Führungsrolle oder an einem Kraftheber des Fahrzeugs befestigt ist. Die Befestigung an dem Gabelträger kann nach teilweiser Umschlingung der zweiten Führungsrolle an der vertikalen Wand des Gabelträgers oder eines damit verbundenen Bauteils erfolgen, wobei auch andere Befestigungspositionen in Betracht kommen. Wenn das andere Ende des Zuggliedes, vorzugsweise des Seils, an der ersten Führungsrolle befestigt ist, dann erfolgt diese Befestigung mit einem solchen Umschlingungsbereich des Seils, daß dieses stets über die Führungsrolle verläuft, und zwar bei jeder möglichen Position des Schwenkarms. Ist das Seil hingegen über die erste Führungsrolle hinaus zu einem im allgemeinen an der Unterseite eines Unimogs angeordneten Kraftheber geführt, dann muß durch eine an geeigneter Stelle angeordnete Umlenkrolle sichergestellt sein, daß bei jeder Schwenkbewegung des Schwenkarms das Seil in Berührung mit einem Umfangsabschnitt der ersten Rolle verbleibt, damit das Seil die parallele Führung des Gabelträgers bei der Schwenkbewegung bewerkstelligen kann.

Wie bereits mehrfach erwähnt, bietet das erfindungsgemäße Fahrzeug die Möglichkeit, den parallel zu sich selbst umsetzbaren Gabelträger aus seiner vorzugsweise horizontalen Position zu verschwenken bzw. zu kippen, um beispielsweise einen auf dem Gabelträger befestigten Container zu entleeren. Hierzu muß die wirksame Länge des Zuggliedes, d.h. vorzugsweise des Seils jedes Schwenkarms verlängert werden.

Wenn das Seil mit seinem fahrzeugseitigen Ende an der ersten Führungsrolle befestigt ist, wird vorgeschlagen, diese Führungsrolle mit einer eigenen Antriebseinrichtung zu versehen, die die Führungsrolle aus ihrer feststehenden Lage freigeben und in Drehung versetzen kann. Zum Kippen des Gabelträgers braucht die Führungsrolle lediglich zur Drehung freigegeben zu werden, da dann durch das Eigengewicht ein Abrollen des Seiles von der Führungsrolle erfolgt, während zur Wiederherstellung der horizontalen Lage des Gabelträgers das Seil wieder mittels des hierzu vorgesehenen Motors aufzuwickeln ist.

Wenn das fahrzeugseitige Ende des Seils an dem bereits erwähnten Kraftheber befestigt ist, kann dieser das Seil durch eine Hub- oder Drehbewegung entsprechend freigeben oder aufwickeln.

Beide Befestigungsarten des Seils -an der mit einer Antriebseinrichtung versehenen Führungsrolle und an dem Kraftheber- ermöglichen es, das Zugglied nachzuspannen, indem entweder die Führungsrolle gedreht oder der Kraftheber verlagert wird, wenn das Zugglied infolge der auftretenden großen Belastungen eine Längenänderung erfahren hat. Hierdurch wird gewährleistet, daß das Zugglied, vorzugsweise das Seil, den Gabelträger während des gesamten Schwenkvorgangs in zu sich stets paralleler Lage halten kann, in der der Gabelträger auf die Ladefläche des Fahrzeugs aufgesetzt werden kann. Die Verschwenkbarkeit der Schwenkarme wird durch diese Nachstellmöglichkeit der wirksamen Länge des Seils nicht behindert.

Dieser besondere Mechanismus, mit dem der Gabelträger horizontal gehalten wird, ist weder verschmutzungsanfällig, noch kann er z.B. durch Steine und dergleichen funktionsunfähig werden. Der Verschleiß des Seiles ist gering, und es bedarf praktisch keiner Wartung, während eine Kette regelmäßig geschmiert werden müßte. Die erfindungsgemäße Verwendung eines Seils hat zudem den Vorteil, daß das Eigengewicht des Mechanismus besonders niedrig ist und daß der gesamte Mechanismus billig herstellbar ist.

Das Kippen des Gabelträgers kann dadurch erleichtert werden, daß das freie Ende jedes Schwenkarms etwa L-förmig abgewinkelt ist, wodurch der erforderliche Freiraum für den Kippvorgang geschaffen wird.

Zur Schwenkbewegung der vorzugsweise zwei Schwenkarme ist eine Vielzahl von Antriebseinrichtungen geeignet. In einer besonders einfachen Ausführungsform sind für jeden Schwenkarm zwei Kolben/Zylindereinheiten angeordnet, von denen eine an einem zweckmäßigerweise vorgesehenen L-förmigen Abwinklung des Schwenkarms und die andere an dem langen Schenkel des Schwenkarms angelenkt sein sollten. Zweckmäßigerweise sind die beiden Anlenkpunkte etwa gleich weit vom Drehpunkt des Schwenkarms entfernt. Die Kolben/Zylindereinheiten, die vorzugsweise hydraulisch, aber auch pneumatisch angetrieben sein können, können anderenends am Rahmen befestigt sein. Die L-förmige Abwinklung am fahrzeugseitigen Endabschnitt verläuft in entgegengesetzter Richtung zu anderen L-förmigen Abwinklung.

Beim Verschwenken der Schwenkarme wird das Ausfahren bzw. Einziehen der Kolbenstangen so koordiniert, daß eine glatte Schwenkbewegung erzielt wird. Wenn die Schwenkarme die fahrzeugsseitige Endstellung ihrer Schwenkbewegung erreichen, nehmen die Kolben/Zylindereinheiten eine derart flache Lage ein, daß sie sich unterhalb der Oberkante des Rahmens befinden, auf den der Gabelträger aufgelegt werden kann.

Alternativ zu dem Vorstehenden kann jeder Schwenkarm an seine fahrzeugseitigen Endbereich fest mit einem Rad mit vorzugsweise seitlichem Gewindekranz verbunden sein, mit dem eine Antriebsschnecke in Eingriff stehen kann. Bei dieser Antriebsform sind zwei getrennte Schneckenantriebe zum Verschwenken der beiden Schwenkarme vorgesehen. Hierbei kann durch eine relativ leichte Drehbewegung oder Bremskraft an der Welle der Antriebsschnecke auf das mit dem Gewindekranz versehene Rad ein hohes Drehmoment übertragen werden, das ohne weiteres das Verschwenken des Schwenkarmes und dabei das Heben und Senken der zugehörigen Lasten ermöglicht.

Nach einem weiteren Vorschlag der Erfindung können die beidenSchwenkarme an ihrem fahrzeugseitigen Endbereich auch jeweils mit einer Radnabe mit Innenverzahnung verbunden sein, mit der jeweils ein Antriebsritzel eines gemeinsamen Vorlegeantriebs in Eingriff steht. Hierbei ist ein gemeinsamer Antrieb angeordnet, der im Prinzip dem Hinterachsenantrieb eines Unimogs entspricht.

Weitere Merkmale, Vorteile und Einzelheiten der Erfindung ergeben sich aus der nachfolgenden Beschreibung einiger bevorzugter Ausführungsformen und anhand der Zeichnung. Dabei zeigen:
- Fig. 1-3: ein erfindungsgemäßes Fahrzeug in drei verschiedenen Arbeitspositionen, nämlich mit auf den Boden abgesetztem Gabelträger (Fig. 1), auf den Tragrahmen des Fahrzeugs aufgesetzten Gabelträger (Fig. 2) und mit gekipptem Gabelträger (Fig. 3);
- Fig. 4: eine Aufsicht auf den wesentlichen Teil eines Zylinder/Kolbenantriebs eines Schwenkarms;
- Fig. 5: eine schematische Darstellung eines Schneckenantriebs für einen Schwenkarm,
- Fig. 6: eine schematische Darstellung eines Teils eines gemeinsamen Vorlegeantriebs für beide Schwenkarme.

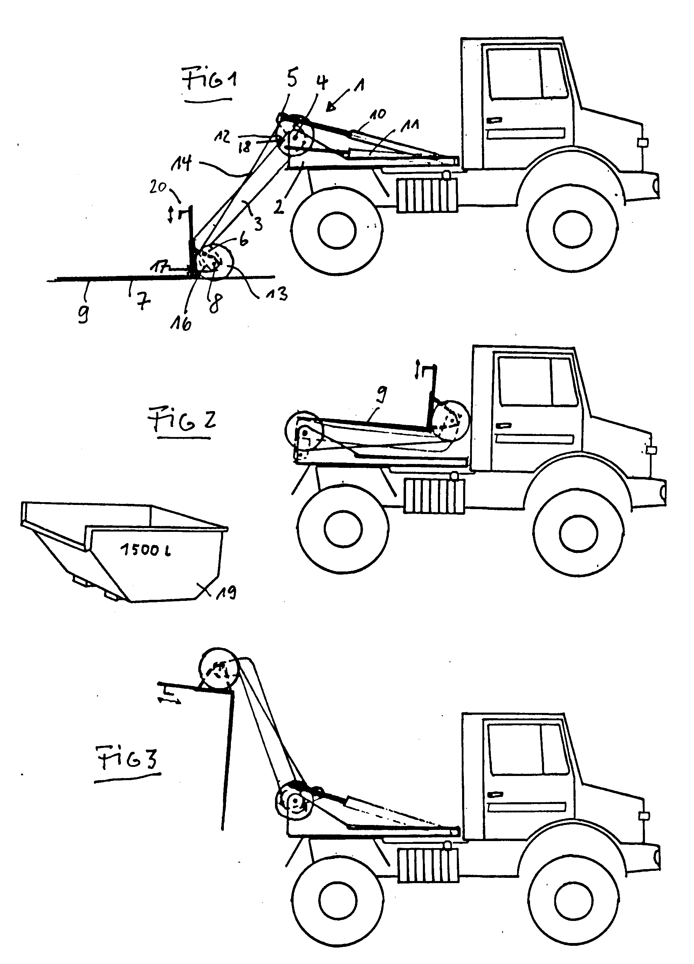

In Figur 1 ist ein Unimog abgebildet, der mit einer erfindungsgemäßen Hub- und Umsetzeinrichtung ausgerüstet ist, die allgemein mit 1 bezeichnet wird. Auf der Tragfläche des Unimogs ist ein Rahmen 2 angebracht, an dem auf der rechten und der linken Fahrzeugseite jeweils ein Schwenkarm 3 angelenkt ist, der um eine Achse 4 gedreht werden kann.

Der Schwenkarm 3 hat an seinem fahrzeugseitigen Endabschnitt eine etwa L-förmige Abwinklung 5 und an seinem anderen, freienEndabschnitt eine entgegengesetzt gerichtete, ebenfalls etwa L-förmige Abwinklung 6. An der letztgenannten Abwinklung 6 der beiden parallelen Schwenkarme 3 ist ein Gabelträger 7 angelenkt, der um eine Achse 8 drehbar ist.

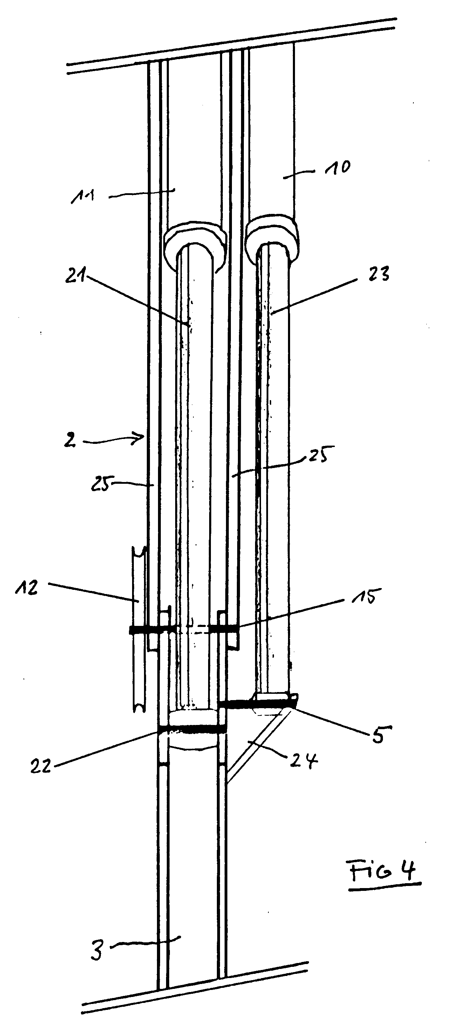

Die beiden seitlich beabstandeten Schwenkarme 3 dienen dazu, den Gabelträger 7 zwischen einer Position auf der Tragfläche des Unimogs gemäß Figur 2 und einer Arbeitsposition umzusetzen, die sich gemäß Figur 1 beispielsweise auf dem Boden hinter dem Fahrzeug befinden kann. Hierbei ist wichtig, daß der Gabelträger im Verlaufe seiner Schwenkbewegung im wesentlichen in der horizontalen Ausrichtung gehalten bleibt, die sein Bodenabschnitt 9 in den Figuren 1 und 2 einnimmt.

Zum Verschwenken des Gabelträgers 7 sind jeweils zwei Kolben/Zylindereinheiten 10, 11 mit jedem Schwenkarm 3 verbunden, wobei die Kolbenstange der in Figur 1 oberen Kolben/Zylindereinheit 10 an der Abwinklung 5 und die Kolbenstange der Kolben/Zylindereinheit 11 an dem langen Steg des Schwenkarms 3 angelenkt sind. Die Zylinder der beidenKolben/Zylindereinheiten 10 und 11 sind an dem Rahmen 2 des Unimogs angelenkt.

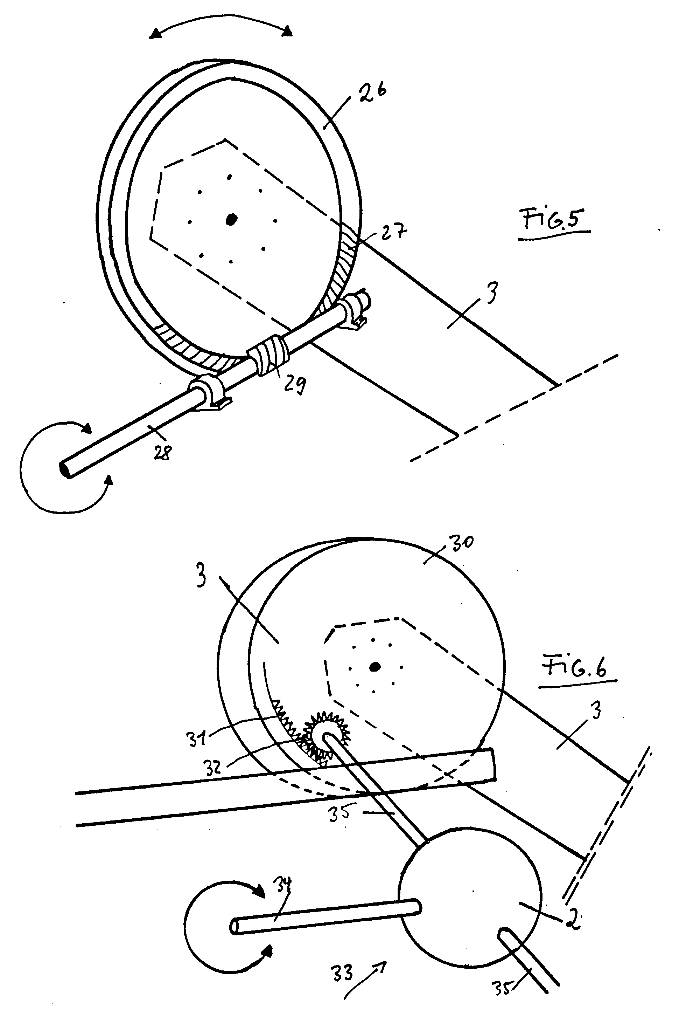

Im Verlaufe der Umsetzung des Gabelträgers 7 aus der in Figur 1 dargestellten Position am Boden über die in Figur 3 dargestellte Zwischenstellung in die Endposition gemäß Figur 2 gelangen die beiden Kolben/Zylindereinheiten in eine Stellung, in der sie exakt hintereinander liegen (Figur 3), jedoch kann dieser Totpunkt durch geeignete Steuerung der von den Kolbenstangen ausgeübten Kräfte glatt überwunden werden.

Damit der Gabelträger 7 in zu sich parallel bleibender Ausrichtung umgesetzt werden kann, sind im Bereich jedes Schwenkarms 3 zwei Führungsrollen 12, 13 befestigt, über die stets ein Seil 14 verläuft. Die fahrzeugseitige Führungsrolle 12 sitzt auf dem die Schwenkachse 4 bildenden Bolzen 15, wie Figur 4 zeigt, und ist durch einen nicht dargestellten Antriebsmechanismus so lange blockiert, bis ein in Figur 3 abgebildeter Kippvorgang ausgeführt wird. Dies bedeutet, daß beim Verschwenken des Schwenkarms 3 die Führungsrolle 12 unbeweglich verbleibt.

Die andere Führungsrolle 13 sitzt auf der Schwenkachse 8, die ebenfalls durch einen Bolzen gebildet sein kann, und ist in dieser Ausführungsform fest mit einer an der vertikalen Wand des Gabelträgers 7 angesetzten Lasche 16 verbunden, so daß die Führungsrolle 13 nur gemeinsam mit dem Gabelträger 7 verschwenkt werden kann. Die Ausbildung kann allerdings auch so getroffen sein, daß die Führungsrolle 13 frei drehbar ist.

Das Seil 14, das aus einem solchen Material besteht, daß seine Länge bei den auftretenden Belastungen im wesentlichen konstant bleibt, ist etwa bei 17 an der vertikalen Wand des Gabelträgers und etwa bei 18 an der Führungsrolle 12 befestigt.

Wenn der Gabelträger 7 von der in Figur 1 dargestellten Position in die Position gemäß Figur 2 verschwenkt wird, wickelt sich das Seil 12 in demselben Maße auf die Umfangsführungsfläche der Führungsrolle 13 auf, in dem das Seil von der Umfangsführungsfläche der Rolle 12 abgewickelt wird, da die beiden Führungsrollen 12, 13 denselben Durchmesser haben und auf den beiden Schwenkachsen des Gabelträgers 7 am Schwenkarm 3 und des Schwenkarms 3 am Rahmen 2 sitzen. Hierdurch ist gewährleistet, daß das Seil 14 (d.h. die beiden Seile 14) den Gabelträger 7 stets im wesentlichen parallel zu sich selbst halten. Da der Befestigungspunkt des Seils 14 auf der in den Figuren linken Seite der Führungsrolle 12 etwa bei 18 liegt, und sich der Befestigungspunkt des Seiles 14 an dem Gabelträger 7 stets hinter der Führungsrolle 13 befindet, verbleibt das Seil 14 beim Auf- und Abwickelvorgang stets in Kontakt mit den beiden Führungsrollen 12, 13, so daß eine durchgehende Halterung des Gabelträgers 7 gewährleistet ist.

Auf dem Gabelträger 7 kann beispielsweise der in Figur 2 abgebildete Container 19 angeordnet werden, der mittels Haken 20 gehalten sein kann, die den in Figur 3 abgebildeten Kippvorgang ohne Herabfallen des Containers ermöglichen.

Dieser Kippvorgang wird dadurch bewerkstellig, daß die wirksame Länge des Seils 14 verlängert wird, d.h. daß das Seil 14 von der Führungsrolle 12 abgewickelt wird. Hierzu ist zunächst ausreichend, daß die Blockierung der Führungsrolle 12 freigegeben wird, wodurch der Gabelträger 7 beispielsweise in der in Figur 3 dargestellten Zwischenposition der Schwenkbewegung um die Achse 8 verschwenkt wird. Anschließend wird die Führungsrolle 12 durch ihren Antriebsmechanismus wieder in die Ausgangslage gedreht, wobei das Seil 14 wieder entsprechend auf die Führungsrolle 12 aufgewickelt wird. Es versteht sich, daß das Seil 14 bei Bedarf (infolge des Kippvorgangs) vollständig um den Umfang der Führungsrolle 12, eventuell mehrfach, gewickelt sein kann.

Figur 3 zeigt Details der Befestigung der Kolben/Zylindereinheiten 10 und 11 an dem Schwenkarm 3. Der Kolben 21 der stärkeren Kolben/Zylindereinheit 11 ist an einem Bolzen 22 angelenkt, der den langen Steg des Schwenkarms 3 durchgreift, während die Kolbenstange 23 der schwächeren Kolben/Zylindereinheit 10 gelenkig an der Abwinklung 5 angreift, die mittels einer seitlichen Verstärkung 24 an dem langen Steg des Schwenkarms 3 angesetzt ist. Der Schwenkarm 3 ist um den Bolzen 15 verschwenkbar, der zwei beabstandete Bleche 25 des Rahmens 2 durchgreift. Wie bereits mehrfach erwähnt, ist die ebenfalls auf dem Bolzen 15 sitzende Führungsrolle 12 durch einen Antriebsmechanismus drehbar, der die Führungsrolle zudem blockieren oder freigeben kann.

Die Figuren 5 und 6 zeigen alternative Antriebseinrichtungen zum Verschwenken der Schwenkarme 3. Hierzu kann gemäß Figur 5 jeder Schwenkarm 3 fest mit einem Rad 26 mit seitlichem Gewindekranz 27 verbunden sein, in den eine auf einer Antriebswelle 28 sitzende Schnecke 29 eingreift. Zum Verschwenken der beiden Schwenkarme 3 sind damit zwei getrennte Schneckenantriebe vorgesehen.

Gemäß Figur 6 kann jeder Schwenkarm 3 mit einer Radnabe 30 mit Innenverzahnung 31 verbunden sein, mit der ein Antriebsritzel 32 eines gemeinsamen Vorlegeantriebs 33 in Eingriff steht. Hierbei wird die Drehbewegung einer Antriebswelle 34 gleichmäßig auf die beiden Radnabenantriebe 35 verteilt, wie dies bei einem Vorgelege- oder Planetenantrieb allgemein bekannt ist.

## Patentansprüche

1. Fahrzeug mit einer Tragfläche mit einem Gabelträger oder dergleichen, einer mit dem Fahrzeug fest verbundenen Hub- und Umsetzeinrichtung für den Gabelträger (7), mit der der Gabelträger (7) von der Tragfläche in eine nahe der Tragfläche befindliche Arbeitsposition und umgekehrt in zu sich stets parallel bleibender Ausrichtung umsetzbar ist, wobei die Hub- und Umsetzeinrichtung wenigstens einen, vorzugsweise zwei in Breitenrichtung der Tragfläche beabstandete Schwenkarme (3) aufweist, die einenends an einem Rahmen (2) des Fahrzeugs angelenkt und mittels jeweils einer oder einer gemeinsamen Antriebseinrichtung (10, 11; 26, 27, 28, 29; 30, 31, 32, 34, 35) verschwenkbar sind, wobei das freie Ende der Schwenkarme (3) an dem Gabelträger (7) angelenkt ist,
**dadurch gekennzeichnet**,
daß die Hub- und Umsetzeinrichtung ferner im Bereich jedes Schwenkarms (3) zwei Führungsrollen (12, 13) aufweist, die denselben wirksamen Durchmesser aufweisen und über die ein mit dem Gabelträger (7) verbundenes Zugglied (14) verläuft, wobei der Mittelpunkt der ersten der beiden Führungsrollen (12) auf der Drehachse (4) des Schwenkarms (3) oder einer mit dieser fluchtenden Verlängerung sitzt und beim Schwenkvorgang nichtdrehbar gehalten ist, und der Mittelpunkt der zweiten Führungsrolle (13) auf der Drehachse (8) des Gabelträgers (7) sitzt, und daß das stets über die Führungsrollen (12, 13) führende Zugglied mit einem Ende an dem Gabelträger (7) und mit dem anderen Ende an der Führungsrolle (12) oder an einem Kraftheber des Fahrzeugs befestigt ist.

2. Fahrzeug nach Anspruch 1,
dadurch gekennzeichnet, daß das Zugglied ein Seil (14) ist.

3. Fahrzeug nach Anspruch 2,
dadurch gekennzeichnet, daß das Seil ein Stahlseil (14) ist.

4. Fahrzeug nach Anspruch 1,
dadurch gekennzeichnet, daß die Führungsrolle (12) von einer eigenen Antriebseinrichtung drehbar ist.

5. Fahrzeug nach einem der Ansprüche 1 bis 4,
dadurch gekennzeichnet, daß zum Verschwenken des Schwenkarms zwei Kolben/Zylindereinheiten (10, 11) angeordnet sind, von denen eine an einer L-förmigen Abwinklung (5) und die andere an dem langen Schenkel des Schwenkarms (3) angelenkt ist.

6. Fahrzeug nach einem der Ansprüche 1 bis 4,
dadurch gekennzeichnet, daß jeder Schwenkarm (3) an seinem fahrzeugseitigen Endbereich fest mit jeweils einem Rad (26) mit Gewindekranz (27) verbunden ist, in welchen eine Antriebsschnecke (29) eingreift.

7. Fahrzeug nach einem der Ansprüche 1 bis 4,
dadurch gekennzeichnet, daß beide Schwenkarme (3) an ihrem fahrzeugseitigen Endbereich fest mit jeweils einer Radnabe (30) mit Innenverzahnung (31) verbunden sind, mit der jeweils ein Antriebsritzel (32) eines gemeinsamen Vorlegeantriebs (33) in Eingriff steht.

## Claims

1. Vehicle having a carrying surface with a fork carrier or the like and having a hoisting and transfer device for the fork carrier (7), which hoisting and transfer device is rigidly connected to the vehicle and can transfer the fork carrier (7) from the carrying surface into an operating position located near the carrying surface and *vice versa* in constantly parallel alignment, the hoisting and transfer device comprising at least one and preferably two pivot arms (3) which are at a spacing in the widthways direction of the carrying surface and which are articulated at one end on a frame (2) of the vehicle and which can be pivotably driven by means of one drive device (10, 11; 26, 27, 28, 29) each or by a common drive device (30, 31, 32, 34, 35), the free end of the pivot arm (3) being articulated on the fork carrier (7), characterised in that the hoisting and transfer device further comprises in the vicinity of each pivot arm (3) two guide pulleys (12, 13) which have the same working diameter and over which a tension member (14) connected to the fork carrier (7) runs, the first of the two guide pulleys (12) lying with its central point on the axis of rotation (4) of the pivot arm (3) or of an extension aligned therewith and being held so as to be non-rotatable during the pivoting step, and the central point of the second guide pulley (13) lying on the axis of rotation (8) of the fork carrier (7); and in that one end of the tension member, which tension member is constantly guide over the guide pulleys (12, 13), is secured to the fork carrier (7) and its other end is secured to the guide pulley (12) or to a power hoist of the vehicle.

2. Vehicle according to claim 1, characterised in that the tension member is a cable (14).

3. Vehicle according to claim 2, characterised in that the cable is a steel cable (14).

4. Vehicle according to claim 1, characterised in that the guide pulley (12) can be rotated by its own drive device.

5. Vehicle according to any one of claims 1 to 4, characterised in that two piston-cylinder units (10, 11), of which one is articulated on an L-shaped angled portion (5) and the other is articulated on the long branch of the pivot arm (3), are arranged for pivoting the pivot arm.

6. Vehicle according to any one of Claims 1 to 4, characterised in that each pivot arm (3) is rigidly connected in its vehicle-side end region to a wheel (26) respectively having a threaded rim (27) in which a drive worm (29) engages.

7. Vehicle according to any one of claims 1 to 4, characterised in that both pivot arms (3) are rigidly connected in their vehicle-side end regions to a wheel hub (30) respectively with internal toothing (31) with which a drive pinion (32) of a common intermediate gear drive (33) meshes in each case.

## Revendications

1. Véhicule présentant une surface portante comprenant un porte-équipements ou similaires, un dispositif de levage et de transfert relié de manière solidaire au véhicule pour le porte-équipements (7), dispositif avec lequel le porte-équipements (7) est transféré depuis la surface portante dans une position de travail à proximité de la surface portante et inversement et, ce, tout en restant parallèle à lui-même, le dispositif de levage et de transfert présentant au moins un de préférence deux bras pivotants (3) maintenus à distance dans le sens de la largeur de la surface portante, qui sont articulés de manière pivotante, au moyen d'un dispositif d'entraînement commun ou respectif (10, 11 ; 26, 27, 28, 29 ; 30, 31, 32, 34, 35), par une extrémité, au cadre (2) du véhicule auquel cas l'extrémité libre des bras pivotants (3) est articulée au porte-équipements (7),
caractérisé en ce que
le dispositif de levage et de transfert présente, en outre, dans la zone de chaque bras pivotant (3) deux poulies-guides (12, 13) qui présentent le même diamètre effectif et sur lesquelles défile un organe de traction (14) relié au porte-équipements (7), le centre de la première des deux poulies-guides (12) reposant sur le pivot (4) du bras pivotant (3) ou bien sur un prolongement aligné avec le pivot et n'étant pas rotatif pendant l'opération de pivotement et le centre de la seconde poulie-guide (13) reposant sur le pivot (8) du porte-équipements (7) et en ce que l'organe de traction défilant en permanence sur les poulies-guides (12, 13) est fixé, par une extrémité, au porte-équipements (7) et, par l'autre extrémité, à la poulie-guide (12) ou à un vérin du véhicule.

2. Véhicule selon la revendication 1,
caractérisé en ce que l'organe de traction est un câble (14).

3. Véhicule selon la revendication 2,
caractérisé en ce que le câble est un câble (14) en acier.

4. Véhicule selon la revendication 1,
caractérisé en ce que la poulie-guide (12) est mise en rotation par son propre dispositif d'entraînement.

5. Véhicule selon l'une des revendications 1 à 4,
caractérisé en ce que, pour le basculement du bras pivotant, il est prévu deux unités à piston et à vérin (10, 11) dont l'une est articulée à un coude en L (5) et l'autre au long côté du bras pivotant (3).

6. Véhicule selon l'une des revendications 1 à 4,
caractérisé en ce que chaque bras pivotant (3) est relié, dans sa zone d'extrémité côté véhicule, de manière solidaire à une roue (26) munie d'une jante filetée (27) dans laquelle s'engage une vis sans fin d'entraînement (29).

7. Véhicule selon l'une des revendications 1 à 4,
caractérisé en ce que les deux bras pivotants (3) sont reliés, dans leur zone d'extrémité côté véhicule, de manière solidaire, respectivement à un moyeu de roue (30) avec une denture interne (31) qui entre en prise avec un pignon menant (32) d'un entraînement commun à engrenages (33).
